# EUROPEAN PATENT APPLICATION

(11) **EP 2 309 769 A2**
(43) Date of publication of application: **13.04.2011**
(21) Application number: 10187113.5
(22) Date of filing: 11.10.2010
(51) Int. Cl.: H04Q 9/00

(54) **Wireless data logging device**

(30) Priority: 10.10.2009 US 278785 P
(71) Applicant: White Box, Inc., Stamford, CT 06907 (US)
(72) Inventor: Hollander, Milton B., Stamford, CT 06903 (US); Macchiarelli, Michael A., Shelton, CT 06484 (US)
(74) Representative: Berglund, Stefan

(57) **Abstract**

A wireless data logging module for a test and measuring device is presented. The data logging module includes a test and measuring device that measures a variable of a process and a wireless transceiver coupled to the test and measuring device. The wireless transceiver includes a microprocessor for capturing and processing signals. The signals encode data and information including the measured variable from the test and measuring device. The transceiver also includes memory coupled to the microprocessor for storing the data, and communication circuitry coupled to the microprocessor. The communication circuitry includes input/output circuitry for transmitting and receiving the signals over a wireless communication path to a plurality of wireless devices. In one embodiment the process variable includes at least one of temperature, voltage, humidity, pressure, strain, resistance, motion, light, current, velocity and flow.

## Description

### CROSS-REFERENCE TO RELATED APPLICATIONS

This patent application claims priority benefit under 35 U.S.C. §119(e) of copending, U.S. Provisional Patent Application, Ser. No. 61/278,785, filed October 10, 2009. This application is also related to U.S. Patent Application, Ser. No. 12/470,969, filed May 22, 2009, which claims the benefit of U.S. Patent Application No. 11/877,285, filed October 24, 2006. The disclosures of these U.S. patent documents are incorporated by reference herein in their entireties.

### BACKGROUND OF THE INVENTION

### 1. Field of the Invention

The present invention relates generally to an improved apparatus for sensing or measuring a parameter of a process and, more particularly, to a self contained module for providing logging of information in a sensing and measuring device and enhancing data communication between the sensing and measuring device and a process display, control and/or recording device.

### 2. Description of Related Art

Generally speaking, it is desirable to sense, measure, record and store a plurality of characteristics of commercial or industrial processes. For example, process variable such as, for example, temperature, pressure, strain, resistance, voltage, velocity, and the like, can positively and negatively influence process control and optimization. In view thereof, industry invests substantial resources to accurately sense and measure processes. Typically, a system of process controls employs sensors located at various points in a process. The sensors are coupled to test and measurement instruments that receive data and/or information via signals from the sensors and determine one or more process variables. The test and measurement instruments may include displays and control devices for exhibiting the received signals and/or determined process variables, and for controlling a predetermined response thereto. Typically, data, signals and/or commands are communicated between sensors and the test and measurement instruments over communication paths by means of point-to-point hard wired connections such as, for example, electrical wires, fiber optic lines, or like connections. As can be appreciated, establishing and maintaining such wired communication paths may be time consuming, costly and error prone.

In the aforementioned commonly owned, U.S. Patent Applications, Serial Nos. 11/877,285 and 12/470,969, of which this application relates, a wireless connector is taught. As disclosed in the Background Sections of these commonly owned U.S. patent documents, the test and measurement devices generally include a sensor terminated with a connector. The connector is, in turn, coupled to another connector or to a test and measurement instrument by wire, fiber optic, or other hardwired connection. In a measurement or control application of, for example, commercial and/or industrial processes, multiple sensors are typically attached by hardwired connections. Moreover, the extent and/or accuracy that a particular characteristic may be measured or controlled may be limited by a length or number of required connections in the communication path. In view thereof, it is advantageous to utilize multiple sensors without the drawbacks of multiple hardwired connections.

Accordingly, the inventors have realized that it is more desirable to employ wireless communication paths for providing information and data from a sensing device to process display, control and recording devices. Moreover, the inventors have realized that a wireless connector may also provide storage or logging features to further improve operation of the sensing device.

### SUMMARY OF THE INVENTION

A wireless data logging module for a test and measuring device is presented. The data logging module provides improved functionality to the test and measuring device, which measures a variable of a process. The data logging module includes a wireless transceiver coupled to the test and measuring device. The wireless transceiver has a microprocessor for capturing and processing signals. The signals encode data and information including the measured variable from the test and measuring device. The transceiver also includes memory coupled to the microprocessor for storing the data, and communication circuitry coupled to the microprocessor. The communication circuitry includes input/output circuitry for transmitting and receiving the signals over a wireless communication path to a plurality of wireless devices.

In one embodiment, the test and measuring device includes a sensor for sensing the process variable. In one embodiment, the process variable includes at least one of temperature, voltage, humidity, pressure, strain, resistance, motion, light, current, velocity and flow.

In one embodiment, the wireless transceiver receives signals from at least one the plurality of wireless devices, processes the received signal and data and/or information encoded therein, and performs a predetermined response or directs the test and measuring device to perform a predetermined response.

### BRIEF DESCRIPTION OF THE DRAWINGS

The foregoing aspects and other features of the presently disclosed embodiments are explained in the following description, taken in connection with the accompanying drawings, wherein:

FIG. 1 is a schematic diagram of a wireless connector, in accordance with one embodiment of the present invention;

FIG. 2 is a simplified block diagram of circuitry of the wireless connector of FIG. 1, in accordance with one embodiment of the present invention;

FIG. 3 is a simplified block diagram of processing circuitry of the wireless connector of FIG. 1, in accordance with one embodiment of the present invention;

FIG. 4 is a schematic diagram of a wireless connector having a built in or self contained sensor, in accordance with one embodiment of the present invention;

FIG. 5 is a schematic diagram of a wireless connector system for test and measurement data communication, in accordance with one embodiment;

FIG. 6 is a schematic diagram of a wireless connector system where a connector communicates directly with an instrument, meter, or other suitable equipment, in accordance with one embodiment;

FIG. 7 is a schematic diagram of a wireless transceiver system where a wireless connector communicates sensor signals to an instrument, meter, or other suitable equipment by means of the transceiver, in accordance with one embodiment;

FIG. 8 is a schematic diagram of a wireless transceiver in accordance with one embodiment of the present invention; and

FIG. 9 is a schematic diagram of a wireless transceiver, in accordance with another embodiment of the present invention.

In these figures like structures are assigned like reference numerals, but may not be referenced in the description of all figures.

### DETAILED DESCRIPTION OF PREFERRED EMBODIMENTS

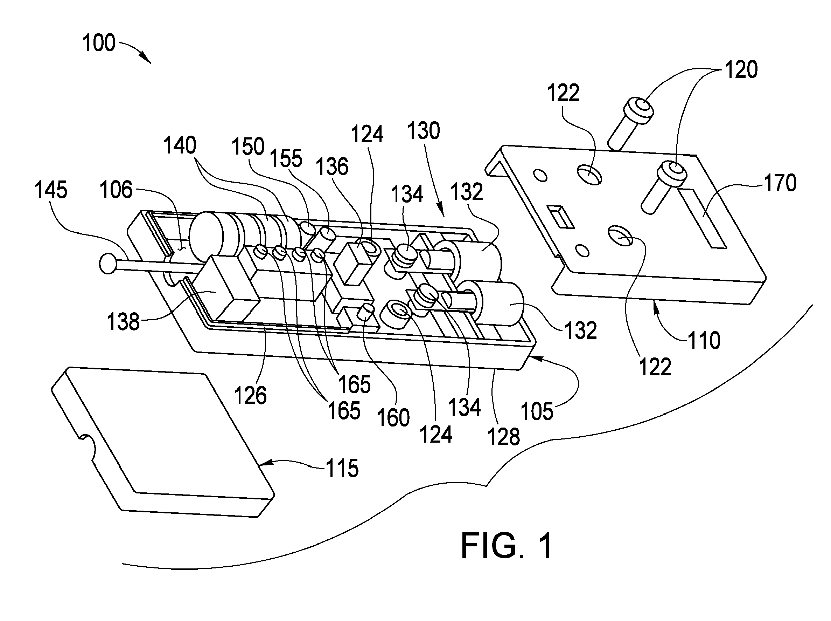

FIG. 1 is a schematic diagram of a wireless connector 100 that receives, processes and transmits data, information and/or control signals over a wireless communication path, in accordance with one embodiment of the present invention. Although the presently disclosed embodiments are described with reference to the drawings, it should be understood that it is within the scope of the present invention for the embodiments to take many alternate forms such that, for example, any suitable size, shape or type of elements or materials could be used therein.

As shown in FIG. 1, the wireless connector 100 includes circuitry for processing a signal received from a sensor and a transmitter for transmitting the processed signal. In one embodiment the wireless connector 100 includes a base 105, a first cover portion 110, and a second cover portion 115_{:} The first cover portion 110 may be secured in position on the base 105 by fasteners 120 such as, for example, two screws 120, which pass through holes 122 in the first cover portion 110 and engage threaded bosses 124 of the base 105. The second cover portion 115 is secured on the base 105 by any conventional means such as, for example, by making a sliding fit on side wall ribbing 126 which may be appropriately undercut. In one embodiment, the base 105 includes an encircling wall 128 that, in cooperation with the cover portions 110 and 115 define an internal compartment or chamber 106. The wall 128 may be cut away (not shown) at a first end, shown generally at 130, to permit connection of input/output lines of a sensor to appropriate contacts 132 mounted on respective terminal posts 134 secured on the base 105.

Processing circuitry 136 may also be optionally provided within the chamber 106 of the wireless connector 100. The processing circuitry 136 may be implemented using hardware components, one or more processors running one or more programs, or a combination of both and may be re-programmable to perform any suitable processing operations. Communication circuitry 138 is included within the chamber 106 of the wireless connector 100 for transmitting signals provided by the sensor or signals output by the processing circuitry 136. In one embodiment, the communication circuitry 138 transmits signals. In another embodiment, the communication circuitry 138 includes transceiver circuitry for two-way wireless communication, e.g., both for transmitting data and information signals and for receiving data, information, command and control signals over the wireless communication path. For example, the communication circuitry 138 is capable of receiving command/control signals from a remote device and, optionally, in combination with the processing circuitry 136, performing received command/control actions or operations based on the received command/control signals. The communication circuitry 138 may also alter processing or communication operations based on the received command/control signals. In addition, the communication circuitry 138 may, optionally, in combination with the processing circuitry 136, be capable of transmitting command/control signals for controlling another device communicating with the wireless connector 100.

As described herein, the communication circuitry 138 provides wireless communication over the wireless communication path using any of a variety of different physical and protocol layer communication methods. For example, the communication technology may include optical, infrared, radio transmission, RFID, or any other suitable communication technology, and may incorporate IrDA, IEEE 802.11, 802.15, Bluetooth, PCS or any other suitable communication method or standard. For example, the ZigBee™ standard, based on IEEE 802.15, may also be utilized for its low power requirements, built in recognition capabilities, high reliability and relatively small packaging size (ZIGBEE is a registered trademark of ZigBee Alliance Corporation, San Ramon, CA). In an exemplary embodiment, the communication circuitry 138 is a ZigBee end device. In other exemplary embodiments, the communication circuitry 138 is a ZigBee coordinator or a ZigBee router.

In one embodiment, the processing circuitry 136 and the communication circuitry 138 are combined together as a single module. In one embodiment, the wireless connector 100 includes a power supply 140 disposed within the chamber 106 that includes one or more batteries for providing power to the processing circuitry 136, the communication circuitry 138, the sensor, or any other function or component requiring power. In one embodiment, an optional emitting device 145 is connected to the communication circuitry 138 to extend the range of communication, for example, to extend the wireless communication path. The emitting device 145 is included within the chamber 106 and extends through the wall 128 of the wireless connector 100 as shown, or may be enclosed by the wireless connector 100. In exemplary embodiments, the emitting device 145 may be, for example, an antenna, an optical emitter, or any other suitable emitting device. The wireless connector 100 may optionally have various indicators and controls such as a battery status indicator 150, a transmit/receive indicator 155, an on/off switch 160, adjustable components and additional switches 165 for calibration and for controlling the processing circuitry 136, the communication circuitry 138, and a display 170. The indicators and controls being accessible by, for example, holes or cutouts in the first cover portion 110.

In exemplary embodiments, when assembled, the wireless connector 100 may have a form factor similar to a ceramic, or miniature ceramic thermocouple connector body such as, for example, is sold by the assignee of the present application, Omega Engineering, Inc. (Stamford, CT), under a UWTC series of product models. While the processing circuitry 136, the communication circuitry 138, the emitting device 145, the various indicators and controls, and the power supply 140 are shown as having a particular size and shape, it should be understood that they may have any suitable size and shape, may be miniaturized, may be arranged together in various combinations, and may be combined in a single package or device.

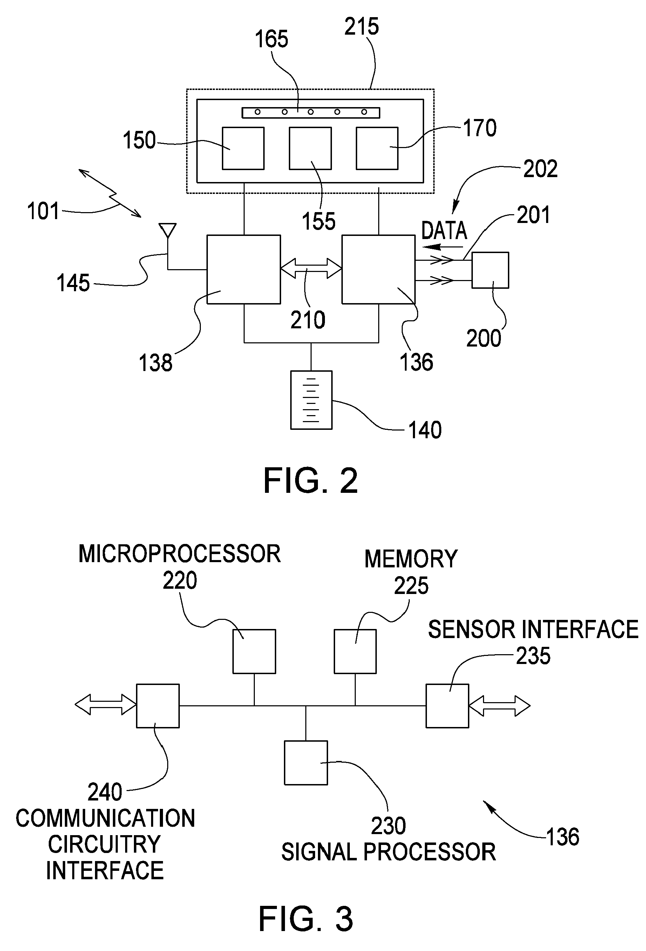

FIG. 2 is a simplified block diagram of the circuitry of the wireless connector 100, according to one embodiment of the invention. The circuitry includes the processing circuitry 136, the communication circuitry 138, optional indicators and controls 215, the optional emitting device 145, and the power supply 140. The circuitry of the wireless connector 100 cooperates to measure, collect, process, store and transmit over a communication path 101 data and information 202 associated with the wireless connector 100 and with signals 201 received from a sensor 200.

FIG. 3 is a simplified block diagram of the processing circuitry 136, according to one embodiment of the invention. The processing circuitry 136 includes a microprocessor 220, a memory device 225, a signal processor 230, a sensor interface 235, and an interface 240 to the communication circuitry 138. The microprocessor 220 performs control functions, time keeping and recording functions, connector diagnostic functions, signal processing functions and data storage functions by executing programs stored in the memory device 225. The memory device 225 is a computer readable medium including magnetic, optical, semiconductor, or other storage technology. The memory device 225 stores programs which cause the microprocessor 220 to operate according to the disclosed embodiments. The signal processor 230 processes the signals 201 received from the sensor 200 (FIG. 2) either independently or under control of the microprocessor 220.

The microprocessor 220 monitors and controls the communication circuitry 138 through the interface 240. For example, the microprocessor 220 instructs the communication circuitry 138 to establish communication over the communication path 101 with another device. The microprocessor 220 provides the communication circuitry 138 with data and/or information 202, e.g., derived from the signals 201 of the sensor 200 or processed signals from the signal processor 230, and instructs the communication circuitry 138 to transmit the data and/or information 202 over the wireless communication path 101, for example, on a periodic basis. In the event that communication with the other device is lost, the microprocessor 220 may instruct the communication circuitry 138 to monitor the connection and to re-establish communication when the other device becomes available and to resume transmission of the data and/or information 202.

The microprocessor 220 may also operate to store the data and/or information 202 derived from the signals 201 received from the sensor 200 or processed signals from the signal processor 230. For example, the signals 201 including the data and/or information 202 from the sensor 200 and/or from the signal processor 230, may be accumulated and stored in the memory 225 for transmission at a later time period. In one embodiment, the signals 201 including the data and/or information 202 are accumulated, stored in the memory 225, and then transmitted when instructed by the microprocessor 220, for example, in response to an event, on a particular date/time, or in response to a switch closure or a command received through the communication circuitry 138. Using the example above, the data and/or information 202 derived from the signals 201 of the sensor 200 may be accumulated and stored in the memory 225 during periods of lost communication and then sent when communication is re-established.

In exemplary embodiments, the microprocessor 220 or the signal processor 230, alone or in combination, process, modify or condition the signals 201 from the sensor 200. For example, microprocessor 220 or signal processor 230 may filter, amplify, compress, apply various algorithms or functions, or otherwise manipulate or clarify the signals 201 from the sensor 200. As another example microprocessor 220 or signal processor 230_{;} alone or in combination, may process, modify or condition the signals 201 from the sensor 200 to accommodate characteristics of a device receiving the transmitted data. The processed, modified or conditioned signals may be transmitted upon receipt or stored and transmitted at a predetermined time (e.g., with a delay) as described above, e.g., over the wireless communication path 101. The microprocessor 220 and the signal processor 230 may also provide other types of data and/or information for transmission, or storage and transmission. For example, test or measurement time stamps may be included in the signals 201 from the sensor 200, a connector serial number or like identification information, a functional state or status of the connector 100 derived from running diagnostic functions, power supply information, location in real time, and the like. Moreover, the data and/or information 202 transmitted may include parity bits or like measures for ensuring complete point-to-point transmission. The data and/or information 202 transmitted may also employ security protocols including encryption and the like to provide secure transmission.

In one embodiment, the sensor 200 is a transducer capable of converting a measurable process characteristic to a signal for use by the wireless connector 100. For example, the sensor 200 may include a measurement device for sensing pressure, temperature, humidity, gas, pH, infrared, ultraviolet, visible light, voltage, current, power, conductivity, strain, load or acceleration. In an example where the sensor 200 is a thermocouple, such as a type-K thermocouple, the microprocessor 220 or the signal processor 230, alone or in combination, process, modify or condition the signals 201 from sensor 200 to appear as another type of thermocouple such as, for example, a type-J thermocouple while maintaining temperature accuracy. As a result, a J-type receiving device, such as a panel meter may display the proper temperature regardless of the type of thermocouple used to collect the temperature data. Thus, different types of sensors may be used as measuring devices for different types of receiving devices and instruments.

Returning to FIG. 2, the processing circuitry 136 is connected to the communication circuitry 138 through a signal path 210: Both the processing circuitry 136 and the communication circuitry 138 may be connected to the optional indicators and controls 215, including the indicators 150 and 155, the display 170, and the adjustable components 165. The emitting device 145 is connected to the communication circuitry 138 for transmitting the data and/or information 202 over the wireless communication path 101_{:} The power supply 140 supplies power to all components requiring power.

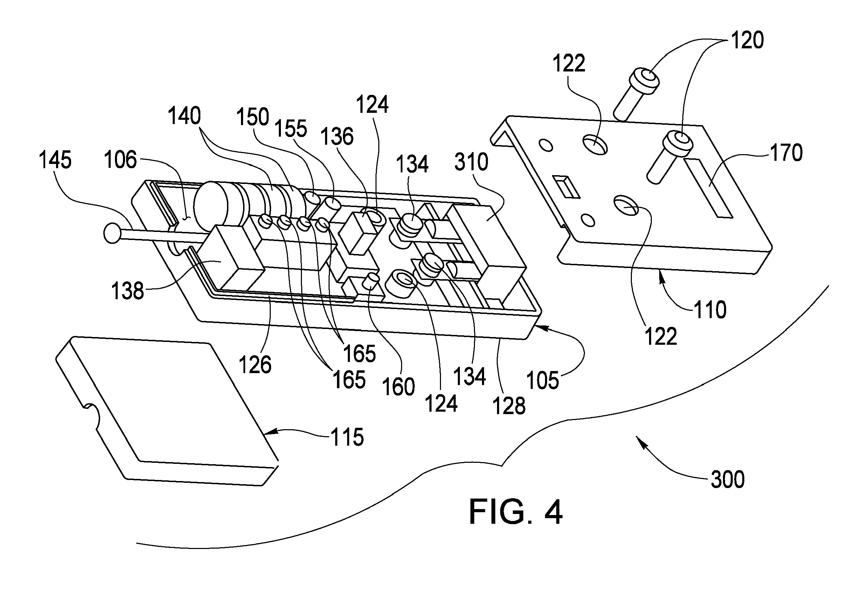

FIG. 4 shows an embodiment of a wireless connector 300 with a built in or self contained sensor 310. The sensor 310 may be enclosed within the chamber 106 of the wireless connector 300 or may extend beyond the boundaries of the connector's body (e.g., the base 105). The wireless connector 300 includes the processing circuitry 136 and the communication circuitry 138 and may optionally include the indicators and controls 215, including the indicators 150 and 155, the display 170, the adjustable components 165, and the emitting device 145.

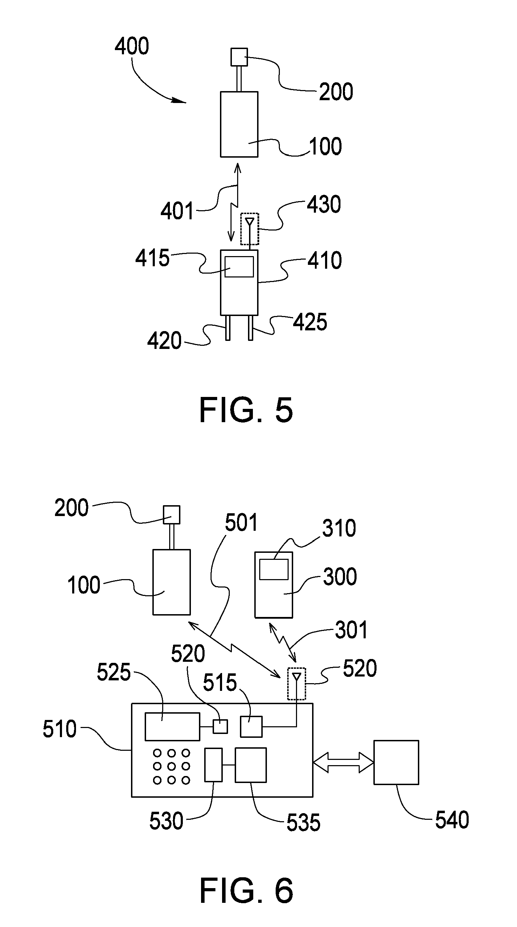

FIG. 5 illustrates one embodiment of a wireless connector system 400 for test and measurement data communication along a wireless communication path 401 between a plurality of devices. In FIG. 5, the sensor 200 is connected to and provides test and measurement signals (e.g., the signals 201) to the wireless connector 100. The wireless connector 100 processes the test and measurement signals and transmits the signals over a wireless communication path 401 using any of the protocols mentioned above, or any other suitable wireless communication protocol. A second wireless connector 410 includes data communication circuitry 415 for receiving the signals 201 transmitted by the wireless connector 100. The data communication circuitry 415 may include two way communication capabilities to receive signals from the wireless connector 100 and to exchange the data and/or information 202 such as status information, command and control information, and the like. In one embodiment, the data communication circuitry 415 controls the communication circuitry 138 and the processing circuitry 136 of the wireless connector 100 by issuing commands and instructions. For example, the data communication circuitry 415 instructs the communication circuitry 138 and the processing circuitry 136 of the connector 100 to process test and measurement signals 201 from the sensor 200, and to transmit the data and/or information 202 at a predetermined rate or during a particular date/time slot to the connector 410. As a further example, the data communication circuitry 415 may also instruct the processing circuitry 136 to process the received signals 201 using particular techniques or algorithms. For example, the data communication circuitry 415 instructs the communication circuitry 138 and the processing circuitry 136 of the connector 100 to start up, shut down, or to activate another device such as a relay or display.

The data communication circuitry 415 may also manage communication among a plurality of wireless connectors (e.g., the wireless connectors 100 and 300 as described below) by independently recognizing each of the plurality of connectors as they communicate, and assigning each of the plurality of connectors different communication channels, for example, different frequencies, time slots, chipping codes, or other differentiating communication characteristics. The second connector 410 may optionally include an external emitting device 430. The second connector 410 may also communicate with the connector 300 or multiple connectors 100 and 300. In an exemplary embodiment, data communication circuitry 415 may be a ZigBee coordinator or a ZigBee router.

In one embodiment, the second connector 410 includes a power supply, for example, a battery for supplying power to data communication circuitry 415. Similar to disclosed embodiments of the connectors 100 and 300, in one embodiment the second connector 410 may have a form factor similar to a ceramic or miniature thermocouple connector body. The second connector 410 may also have male connector pins 420, 425 with cylindrical or blade shaped extending contacts.

The second connector 410 may plug into an instrument, meter, or other suitable equipment (described below) and provide signals from the sensor 200 to the equipment. Thus, the signals 201 from the sensor 200 may be provided without a hardwired connection between the sensor 200, the connectors 100, 300 and 410, and the test and measurement equipment.

FIG. 6 shows yet another aspect of the invention, where the connector 100 communicates directly with an instrument, meter, or other suitable equipment 510. The equipment 510 may include data communication circuitry 515 for receiving the signals (e.g., the signals 201) transmitted by the connector 100 over a wireless communication path 501. The equipment 510 may optionally include an external emitting device 520. The data communication circuitry 515 may include two way communication capabilities to receive the signals from the connector 100 and to exchange data, information such as status information, and command/control information. The data communication circuitry 515 may have all the capabilities of the data communication circuitry 415 described above. Similar to the data communication circuitry 415 described above, the data communication circuitry 515 may also manage communication among multiple connectors (e.g., the connectors 100 and 300) by recognizing additional connectors as they communicate and assigning them different communication channels, for example, different frequencies, time slots, chipping codes, or other differentiating communication characteristics. In an exemplary embodiment, the data communication circuitry 515 may be a ZigBee coordinator or a ZigBee router.

In one embodiment, the equipment 510 includes test and measurement capabilities. For example, the equipment 510 may be any one or any combination of a meter, test equipment or a control device for processing pressure, temperature, humidity, gas, pH, infrared, ultraviolet, visible light, voltage, current, power, conductivity, strain, or acceleration. As described herein, the signals 201 from the sensor 200 may be provided without a hardwired connection between the sensor 200 and the equipment 510 such as by being transmitted over the wireless communication path 501. The equipment 510 may also communicate over a second wireless communication path 301 with the connector 300 having a built in sensor (e.g., the sensor 310) as described above. The equipment 510 may include circuitry 520 for driving a display 525 to present data and information (e.g., the data and/or information 202) related to the received signal in human readable form. The equipment 510 may also include processing circuitry 530 for further conditioning the received signal and process control circuitry 535 for controlling an external process or product, shown generally at 540, using the received signal or an output of the processing circuitry 530.

Other embodiments of the wireless connector 100 may be included as part of a thermocouple assembly, imbedded into a thermocouple head and well assembly, or into a thermocouple package or housing. The wireless connector 100 may be connected to thermocouple assemblies, pressure transducers, load cells, anemometers, and other sensors, as well as RTDs and thermistors. Alternately, the components of the wireless connector 100 may be incorporated into these and other types of assemblies.

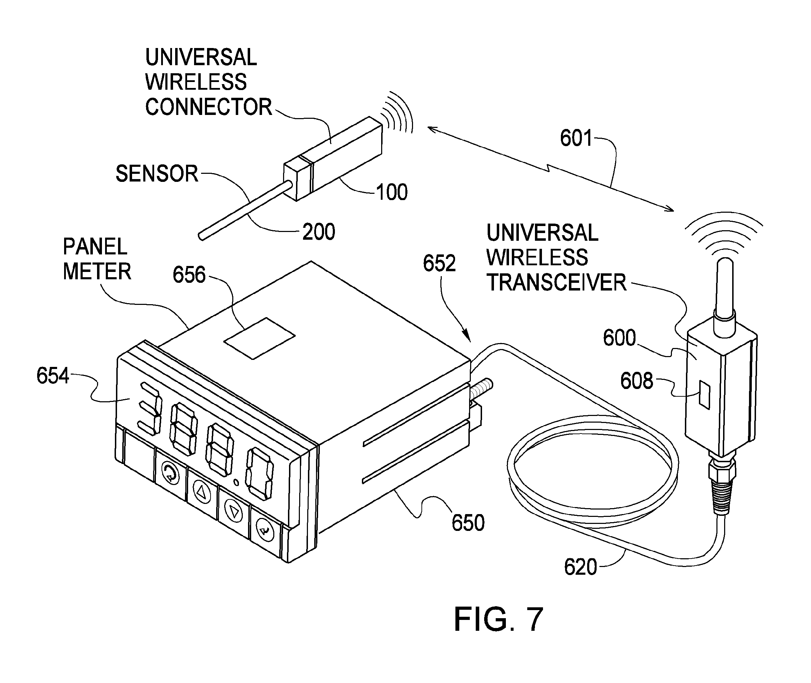

In one aspect of the invention, illustrated in FIG. 7, the wireless connector 100 transmits the signals 201 received from the sensor 200 over a wireless communication path 601 to a universal wireless transceiver 600. The universal wireless transceiver 600 is coupled via a non-wireless connection 620 to a test and measurement device 650 such as, for example, a panel meter, for processing the signals 201 and the data and/or information 202 encoded therein, e.g., pressure, temperature, humidity, gas, pH, infrared, ultraviolet, visible light, voltage, current, power, conductivity, strain, or acceleration measurements and/or for transmitting command/control signals from the test and measurement device 650 to the wireless connector 100. In one embodiment, the test and measurement device 650 includes a display 654 for exhibiting the received signals and/or a process control device 656 for evaluating the process variable and for controlling a predetermined response thereto. It should be appreciated that, in effect, the universal wireless transceiver 600 converts the test and measurement device 650 into a device capable of sending and receiving signals over a wireless communication path. For example, input/output connections, shown generally at 652, of the test and measurement device 650 that were previously not wireless (e.g., non-wireless such as a hardwired cable or like connection) to sensors and other process measuring devices, are now coupled to the universal wireless transceiver 600 by input/output circuitry 608 of the wireless transceiver 600, for example, the non-wireless connection 620, and the universal wireless transceiver 600 transmits/receives signals to/from wireless process measuring devices (e.g., the wireless connector 100) over the wireless communication path 601. Accordingly, the test and measurement device 650 is now capable of sending/receiving data, information and/or command/control information to/from wireless measuring devices (e.g., sensors of the wireless connectors 100 and 300) that monitor such process variables as, for example, temperature, voltage, humidity, pressure, strain, resistance, motion, light, current, velocity, flow and the like.

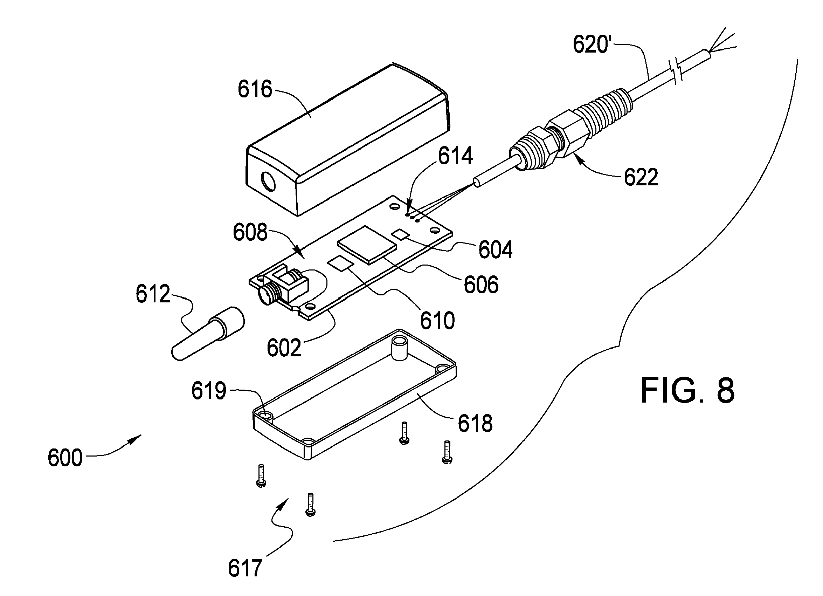

In one embodiment, illustrated in FIG. 8, the universal wireless transceiver 600 includes a base 602 for electronic circuitry such as, for example, a printed circuit board or the like, a first cover portion 616, and a second cover portion 618. The first cover portion 616 may be secured in position about the base 602 by fasteners 617 such as, for example, screws, which pass through holes 619 in the second cover portion 618 and engage threaded bosses or the like (not shown) of the first cover portion 616. As shown in FIG. 8, the circuitry of the universal wireless transceiver 600 includes power regulator circuitry 604, a microprocessor 606 and communication circuitry 608 such as transceiver circuitry 610. The microprocessor 606 may be implemented using hardware components, one or more processors running one or more programs, or a combination of both and may be re-programmable to perform any suitable processing operations. As noted above, the communication circuitry 608 includes the transceiver circuitry 610 (e.g., a transceiver 610) for two-way wireless communication, e.g., both for transmitting data, information and command/control signals and for receiving data and information signals over the wireless communication path 601. In exemplary embodiments, the communication circuitry 608 also includes digital and/or analog input and/or output circuitry and an emitting device 612 such as, for example, an antenna, an optical emitter, or any other suitable emitting device.

As shown in FIG. 8, the non-wireless connection 620 between the universal wireless transceiver 600 and the test and measurement device 650 is comprised of a cable 620' coupled to leads 614 of the base 602. As is generally know in the art, the cable connection 620' includes means 622 for securing the non-wireless connection 620 to the first and second cover portions 616 and 618 such as, for example, a threaded cable connector or coupling.

The universal wireless transceiver 600 includes the power regulator circuitry 604 disposed on the base 602 for delivering electrical power to components of the universal wireless transceiver 600. In one embodiment, the power regulator circuitry 604 includes an internal power supply such as, for example, a battery. In another embodiment, power regulator circuitry 604 requires no internal power supply (e.g., battery) and instead receives electrical power from a host instrument (e.g., the test and measurement device 650) or is coupled to an external power source by means of an adapter. Accordingly, the universal wireless transceiver 600 is a self contained wireless device that may be mounted to an existing non-wireless test and measurement device or instrument. By coupling the universal wireless transceiver 600 to the existing device or instrument allows the instrument to receive wireless data and information (e.g., measurements of process variables) from a wide selection of sensors such as, for example, temperature, voltage, humidity, pressure, strain, resistance, motion, light, current, air velocity and flow measuring devices. For example, the universal wireless transceiver 600 receives data and information (e.g., the data and information 202) over the wireless communication path 601, processes the measurement data and information (e.g., with microprocessor 606), for example, converts the measurement data and/or information to an analog or digital output signal that is then feed or provided to the input/output connections 652 of the test and measurement device 650.

It should be appreciated that similar to the data communication circuitry 415 and 515 described above, the communication circuitry 608 of the universal wireless transceiver 600 manages communication from a plurality of sensors and/or wireless connectors (e.g., the wireless connectors 100 and 300) by individually recognizing the sensors and/or connectors and assigning them different communication channels in the wireless communication path 601, for example, different frequencies, time slots, chipping codes, or other differentiating communication characteristics. For example, in one embodiment, the communication circuitry 608 may include a ZigBee coordinator or a ZigBee router. In one embodiment, the communication circuitry 608 employs automatic communication channel switching (e.g., RF channel switching) to minimize or eliminate interference from other wireless communication devices.

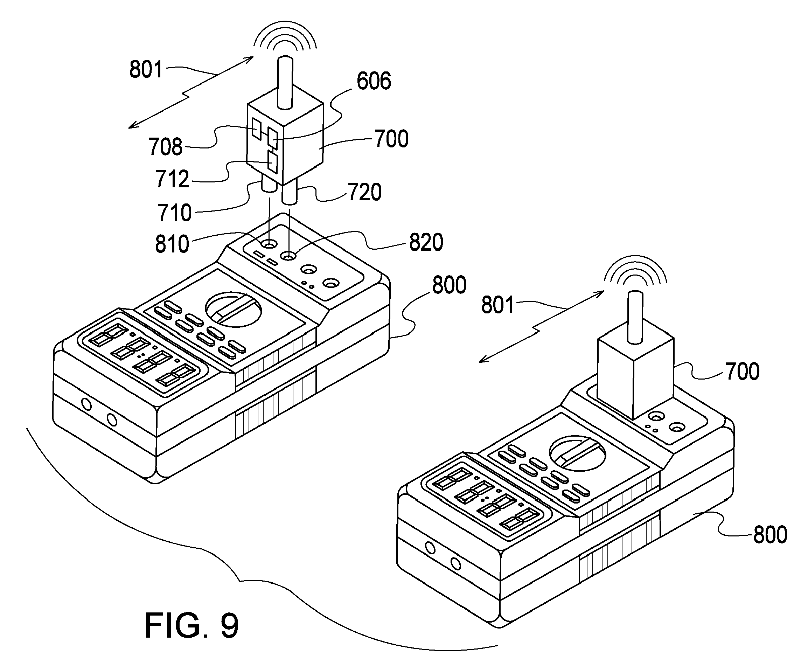

In one embodiment, illustrated in FIG. 9, a wireless transceiver 700 includes the circuitry of the universal wireless transceiver 600, for example, the power regulator circuitry 604, the microprocessor 606 and the communication circuitry 608 such as the transceiver circuitry 610. In the illustrated embodiment, the wireless transceiver 700 includes an internal power supply, for example, a battery for supplying power to components of the wireless transceiver 700. The wireless transceiver 700 differs from the wireless transceiver 600 (FIG. 8) in that the non-wireless connection 620 is comprised of male connector pins 710 and 720 and does not include the hardwired cable connection 620'. The male connector pins 710 and 720, respectively, are received by corresponding input/output connectors 810 and 820 of a test and measurement device 800 such as, for example, a portable, handheld test and measurement device. In one embodiment, the handheld test and measurement device 800 is a handheld multi-meter, thermo-meter, or the like. In one embodiment, the input/output connectors 810 and 820 are cylindrical or blade shaped extending contacts. As noted above, the wireless transceiver 700 provides two-way wireless communication between the handheld device 800 and sensors 200 over a wireless communication path 801, e.g., both for transmitting data and information signals from the sensors 200 to the handheld device 800 and for receiving data, information and/or command/control signals from the test and measurement device 800 (e.g., the handheld device 800) to the sensors 200 over a wireless communication path 801.

In one embodiment, the wireless transceiver 700 includes systems and methods for recording and storing data measured by a host sensor or instrument, process display or control device such as the handheld device 800. In this embodiment, for example, the transceiver 700 includes logging features as described below. The transceiver 700 comprises an input circuit 708 for receiving analog, digital or wireless information from the host sensor or instrument, a micro processor (e.g., micro processor 606) for measuring and processing the incoming data, a memory storage device 712 for saving the recorded data for later retrieval. Stored data can be retrieved by means of a hard wired connection to the module like via a USB connection or the module may incorporate a built-in radio transmitter for down loading recorded data wirelessly to a receiving instrument, printer or computer.

In one embodiment, the wireless transceiver and data logging module 700 is a stand-alone, self contained device that is directly attached to a sensor or host instrument, for example, the test and measurement device 800 of FIG. 9. When attached and activated the module 700 reads and records the process values being measured by the sensor or host instrument. As an example the module can be plugged into a standard temperature probe. The attachment converts the standard probe into a data logging temperature probe.

It should be appreciated that any process can be measured and recorded by the wireless transceiver and data logging module 700 such as, for example, temperature, pressure, humidity, air speed, voltage, current, and the like. The recorded measurements are stored in the memory 712 of the module 700 for later retrieval and documentation. In one embodiment, the module 700 includes a removable memory card that can be directly inserted into a computer, PDA or cell phone for data transfer.

Thus, the disclosed embodiments provide a mechanism to utilize multiple sensors for monitoring and control a process without the drawbacks of installing and maintaining multiple hardwired connections. Moreover, the disclosed embodiments teach systems and methods for converting existing systems using test and measurement equipment hardwired to sensors, into systems that use test and measurement equipment that is coupled to sensors by wireless communication connections and which include data capture and logging features. Accordingly, the disclosed embodiments generally eliminate the need for wired connections from and between sensors and test and measurement devices and controllers.

It should be understood that the foregoing description is only illustrative of the present embodiments. Various alternatives and modifications can be devised by those skilled in the art without departing from the embodiments disclosed herein. Accordingly, the embodiments are intended to embrace all such alternatives, modifications and variances which fall within the scope of the appended claims.

## Claims

1. A wireless data logging module for a test and measuring device, comprising:
a test and measuring device that measures a variable of a process; and
a wireless transceiver coupled to the test and measuring device, the wireless transceiver including:
a microprocessor for capturing and processing signals, the signals encodes data and information including the measured variable from the test and measuring device;
memory coupled to the microprocessor for storing the data; and
communication circuitry coupled to the microprocessor, the communication circuitry including input/output circuitry for transmitting and receiving the signals over a wireless communication path to a plurality of wireless devices.

2. The wireless data logging module of claim 1, wherein the test and measuring device includes a sensor for sensing the variable.

3. The wireless data logging module of claim 3, wherein the process variable includes at least one of temperature, voltage, humidity, pressure, strain, resistance, motion, light, current, velocity and flow.

4. The wireless data logging module of claim 1, wherein the input/output circuitry include digital and/or analog input/output circuitry.

5. The wireless data logging module of claim 1, wherein the processed signals include command and control signals transmit to and received by the wireless transceiver from at least one of the plurality of wireless devices, the command and control signals directing a response by the test and measuring device.

6. The wireless data logging module claim 1, further comprising power regulator circuitry for providing power to the wireless transceiver.

7. The wireless data logging module of claim 6, wherein the power regulator circuitry receives the power for the wireless transceiver from the test and measurement device.

8. The wireless data logging module of claim 1, wherein the wireless transceiver is coupled to the test and measurement device by male connector pins.
